(19)

**Europäisches Patentamt**
**European Patent Office**
**Office européen des brevets**

(11) **EP 4 745 381 A1**

(12) **EUROPEAN PATENT APPLICATION**

(43) Date of publication:
**20.05.2026 Bulletin 2026/21**

(21) Application number: **25216455.3**

(22) Date of filing: **17.11.2025**

(51) International Patent Classification (IPC):
**F02C 9/00** (2006.01)

(52) Cooperative Patent Classification (CPC):
**F02C 9/00;** F05D 2270/02; F05D 2270/101;
F05D 2270/1022; F05D 2270/17; F05D 2270/304

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.11.2024 US 202418949577**

(71) Applicant: **RTX Corporation**
**Farmington, CT 06032 (US)**

(72) Inventor: **SIDELKOVSKIY, Dmitriy**
**Ellington, 06029 (US)**

(74) Representative: **Dehns**
**10 Old Bailey**
**London EC4M 7NG (GB)**

(54) **SYSTEMS AND METHODS FOR BREAKING DOWN GROUND VORTICES IN AN AIRCRAFT PROPULSION SYSTEM INLET**

(57)      An aircraft propulsion system (20) includes a gas turbine engine (22), a nacelle (24), and a controller (78). The gas turbine engine (22) includes a rotational assembly rotatable about an axis (44). The rotational assembly includes a bladed fan rotor (58). The bladed fan rotor (58) includes a plurality of fan blades (62). The nacelle (24) houses the gas turbine engine (22). The nacelle (24) includes an air inlet (68). The air inlet (68) forms an inlet flow region (76). The inlet flow region (76) includes a reference section (98) at and upstream of the plurality of fan blades (62). The reference section (98) includes a cross-sectional flow area of the inlet flow region (76). The controller (78) is configured to control the gas turbine engine (22) to operate at or above a target engine speed corresponding to corrected air mass flow rate per unit area through the reference section (98) which is greater than a vortex breakdown threshold for the reference section (98).

FIG. 2

## Description

BACKGROUND

1. Technical Field

This disclosure relates generally to aircraft propulsion systems and, more particularly, to systems and methods for breaking down a ground vortex at an aircraft propulsion system air inlet.

2. Background Information

Some aircraft propulsion systems, such as those including turbofan gas turbine engines, may experience ground vortex interference with propulsion system air inlet operation. Various systems and methods are known in the art for preventing or mitigating the impact of ground vortices. While these known systems and methods may be suitable for their intended purposes, there is always room in the art for improvement.

SUMMARY

According to an aspect of the present disclosure, an aircraft propulsion system includes a gas turbine engine, a nacelle, and a controller. The gas turbine engine includes a rotational assembly rotatable about an axis. The rotational assembly includes a bladed fan rotor. The bladed fan rotor includes a plurality of fan blades. The nacelle houses the gas turbine engine. The nacelle includes an air inlet. The air inlet forms an inlet flow region. The inlet flow region includes a reference section at and upstream of the plurality of fan blades. The reference section includes a cross-sectional flow area of the inlet flow region. The controller includes a processor connected in signal communication with a non-transitory memory storing instructions which, when executed by the processor, cause the processor to control the gas turbine engine to operate at or above a target engine speed corresponding to corrected air mass flow rate per unit area through the reference section which is greater than a vortex breakdown threshold for the reference section.

In any of the aspects or embodiments described above and herein, the instructions, when executed by the processor, may further cause the processor to determine the vortex breakdown threshold for the reference section, using a crosswind velocity (Vx) input, by determining a crosswind Mach number (MNx) of the crosswind velocity (Vx) input. The vortex breakdown threshold may be a function of the crosswind Mach number (MNx) and a predetermined ratio of axial inlet velocity to crosswind velocity for vortex breakdown in the reference section (K1). The vortex breakdown threshold may be a first value of the corrected air mass flow rate per unit area within the reference section. The instructions, when executed by the processor, may further cause the processor to determine the target engine speed for the gas turbine engine corresponding to the vortex breakdown threshold.

In any of the aspects or embodiments described above and herein, the predetermined ratio of axial inlet velocity to crosswind velocity for vortex breakdown in the reference section (K1) may be between 14 and 16.

In any of the aspects or embodiments described above and herein, the target engine speed may be a rotational speed of the rotational assembly.

In any of the aspects or embodiments described above and herein, the instructions, when executed by the processor, may further cause the processor to determine a first engine speed setting for the gas turbine engine corresponding to the vortex breakdown threshold, determine a takeoff thrust demand for the aircraft propulsion system, determine a second engine speed setting for the gas turbine engine corresponding to the takeoff thrust demand, and control the gas turbine engine to operate at or above the target engine speed set as the greater of the first engine speed setting or the second engine speed setting.

In any of the aspects or embodiments described above and herein, the instructions, when executed by the processor, may further cause the processor to determine an inlet air flow separation threshold for the inlet flow region, and the inlet air flow separation threshold is a second value of the corrected air mass flow rate per unit area within the reference section, and control the gas turbine engine to operate at or above the target engine speed by: where the first value is less than the second value, determine a first static start engine speed setting for the gas turbine engine, and control the gas turbine engine to operate at or above the target engine speed set as the first static start engine speed and, where the first value is greater than the second value, determine a second rolling start engine speed setting for the gas turbine engine, and control the gas turbine engine to operate at or above the target engine speed set as the second rolling start engine speed.

In any of the aspects or embodiments described above and herein, the corrected air mass flow rate per unit area may be defined through the cross-sectional flow area.

In any of the aspects or embodiments described above and herein, the bladed fan rotor may further include a nose cone having an upstream axial end, and the reference section may be between the plurality of fan blades and the upstream axial end.

According to another aspect of the present disclosure, a method for operating a propulsion system of an aircraft to break down a ground vortex includes rotating a rotational assembly of a gas turbine engine of the propulsion system about an axis to form a corrected air mass flow rate per unit area within a reference section of an air inlet of the propulsion system, the rotational assembly including a bladed fan rotor, the bladed fan rotor including a plurality of fan blades at a downstream end of the reference section, determining a vortex breakdown threshold for the reference section using a crosswind velocity (Vx) input, and the vortex breakdown threshold is a first value of the corrected air mass flow rate per unit area, determining a target engine speed for the gas turbine engine corresponding to the vortex breakdown threshold, and controlling the gas turbine engine to operate at or above the target engine speed.

In any of the aspects or embodiments described above and herein, determining the vortex breakdown threshold may include determining a crosswind Mach number (MNx) of the crosswind velocity (Vx) input, and the vortex breakdown threshold may be a function of the crosswind Mach number (MNx) and a predetermined ratio of axial inlet velocity to crosswind velocity for vortex breakdown in the reference section (K1).

In any of the aspects or embodiments described above and herein, a ratio of an average axial air flow Mach number (MNinlet) through the reference section to the crosswind Mach number (MNx) may be greater than or equal to the predetermined ratio of axial inlet velocity to crosswind velocity for vortex breakdown in the reference section (K1) while controlling the gas turbine engine to operate at or above the target engine speed.

In any of the aspects or embodiments described above and herein, a ratio of an average axial air flow velocity (Vinlet) through the crosswind velocity (Vx) input may be greater than or equal to the predetermined ratio of axial inlet velocity to crosswind velocity for vortex breakdown in the reference section (K1) while controlling the gas turbine engine to operate at or above the target engine speed.

In any of the aspects or embodiments described above and herein, the predetermined ratio of axial inlet velocity to crosswind velocity for vortex breakdown in the reference section (K1) may be between 14 and 16.

In any of the aspects or embodiments described above and herein, the target engine speed may be a rotational speed of the rotational assembly.

In any of the aspects or embodiments described above and herein, the method may further include determining a first engine speed setting for the gas turbine engine corresponding to the vortex breakdown threshold, determining a takeoff thrust demand for the aircraft propulsion system, determining a second engine speed setting for the gas turbine engine corresponding to the takeoff thrust demand, and performing a takeoff procedure including the step of controlling the gas turbine engine to operate at or above the target engine speed by controlling the gas turbine engine to operate at or above the target engine speed set as the greater of the first engine speed setting or the second engine speed setting.

In any of the aspects or embodiments described above and herein, the method may further include determining an inlet air flow separation threshold for air inlet, and the inlet air flow separation threshold may be a second value of the corrected air mass flow rate per unit area within the reference section. The method may further include performing a takeoff procedure including the step of controlling the gas turbine engine to operate at or above the target engine speed by controlling the gas turbine engine to operate at or above the target engine speed by, where the first value is less than the second value, determining a first static start engine speed setting for the gas turbine engine, and controlling the gas turbine engine to operate at or above the target engine speed set as the first static start engine speed and, where the first value is greater than the second value, determining a second rolling start engine speed setting for the gas turbine engine, and controlling the gas turbine engine to operate at or above the target engine speed set as the second rolling start engine speed.

In any of the aspects or embodiments described above and herein, the reference section may have a cross-sectional flow area, and the corrected air mass flow rate per unit area may be defined through the cross-sectional flow area.

In any of the aspects or embodiments described above and herein, the cross-sectional flow area may be orthogonal to the axis.

In any of the aspects or embodiments described above and herein, the bladed fan rotor may further include a nose cone having an upstream axial end, and the reference section may be between the plurality of fan blades and the upstream axial end.

In any of the aspects or embodiments described above and herein, the steps of rotating the rotational assembly, determining the vortex breakdown threshold, determining the target engine speed, and controlling the gas turbine engine to operate at or above the target engine speed may be performed with the aircraft in a grounded condition.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

BRIEF DESCRIPTION OF THE DRAWINGS

FIG. 1 illustrates a perspective view of an aircraft including a propulsion system, in accordance with one or more embodiments of the present disclosure.

FIG. 2 schematically illustrates a cutaway, side view of an aircraft propulsion system including a gas turbine engine, in accordance with one or more embodiments of the present disclosure.

FIG. 3 schematically illustrates a cutaway, side view of an air inlet of the aircraft propulsion system, in accordance with one or more embodiments of the present disclosure.

FIG. 4 schematically illustrates a front view of the air inlet, in accordance with one or more embodiments of the present disclosure.

FIG. 5 illustrates a graph depicting exemplary ground vortex breakdown characteristics for an aircraft propulsion system air intake, in accordance with one or more embodiments of the present disclosure.

FIG. 6 illustrates a graph depicting an exemplary ground vortex breakdown threshold, in accordance with one or more embodiments of the present disclosure.

FIG. 7 illustrates a block diagram depicting a method for operating an aircraft propulsion system to break down an air intake ground vortex, in accordance with one or more embodiments of the present disclosure.

FIG. 8 illustrates a block diagram depicting a method for operating an aircraft propulsion system for an aircraft takeoff procedure, in accordance with one or more embodiments of the present disclosure.

FIG. 9 illustrates another block diagram depicting the method for operating an aircraft propulsion system for an aircraft takeoff procedure, in accordance with one or more embodiments of the present disclosure.

DETAILED DESCRIPTION

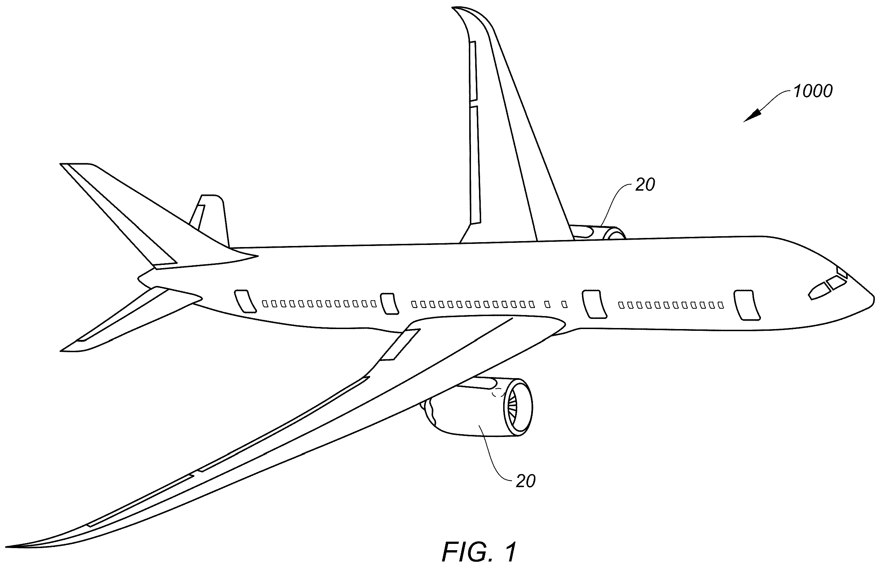

FIG. 1 illustrates a propulsion system 20 for an aircraft 1000. Briefly, the aircraft 1000 of FIG. 1 is a fixed-wing aircraft (e.g., an airplane). However, the aircraft 1000 may alternatively be configured as a rotary-wing aircraft (e.g., a helicopter), a tilt-rotor aircraft, a tilt-wing aircraft, or another aerial vehicle. Moreover, the aircraft 1000 may be a manned aerial vehicle or an unmanned aerial vehicle (UAV, e.g., a drone).

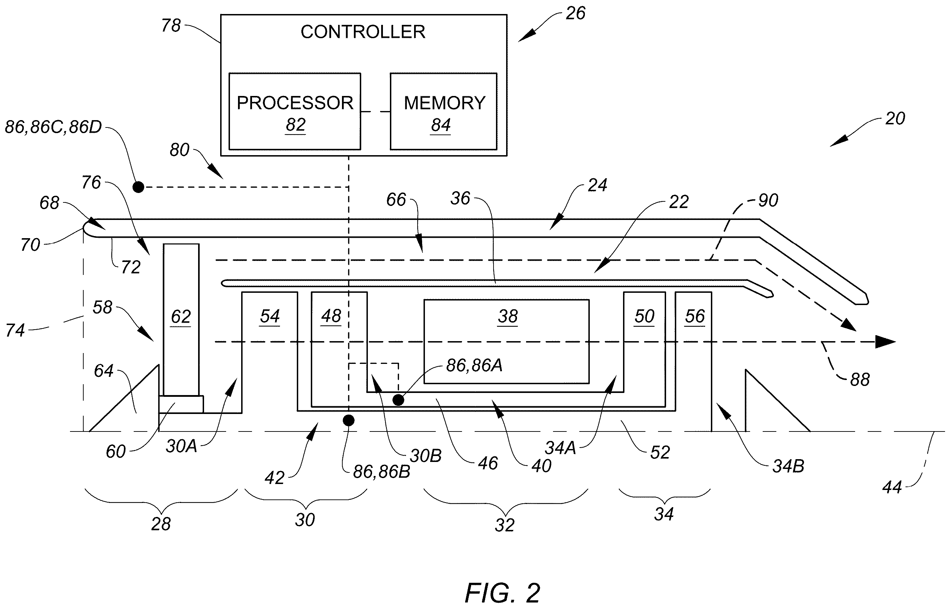

FIG. 2 schematically illustrates a cutaway, side view of the propulsion system 20. The propulsion system 20 includes a gas turbine engine 22, a nacelle 24, and an engine control system 26. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines.

The gas turbine engine 22 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 38 (e.g., an annular combustor). The turbine section 34 includes a high-pressure turbine (HPT) 34A and a low-pressure turbine (LPT) 34B.

Components of the fan section 28, the compressor section 30, and the turbine section 34 form a first rotational assembly 40 (e.g., a high-pressure spool) and a second rotational assembly 42 (e.g., a low-pressure spool) of the gas turbine engine 22. The first rotational assembly 40 and the second rotational assembly 42 are mounted for rotation about an axis 44 (e.g., a rotational axis; an axial centerline of the gas turbine engine 22) of the gas turbine engine 22 relative to the engine static structure 36.

The first rotational assembly 40 includes a first shaft 46, a bladed first compressor rotor 48 for the high-pressure compressor 30B, and a bladed first turbine rotor 50 for the high-pressure turbine 34A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 30A, a bladed second turbine rotor 56 for the low-pressure turbine 34B, and a bladed fan rotor 58 for the fan section 28. The second shaft 52 interconnects the bladed second compressor rotor 54, the bladed second turbine rotor 56, and the bladed fan rotor 58. The bladed fan rotor 58 may alternatively be connected to the second shaft 52 by a gear train (e.g., a reduction gear assembly) configured to drive rotation of the bladed fan rotor 58 at a different rotational speed than the second shaft 52. The bladed fan rotor 58 includes a fan disk 60, a plurality of fan blades 62, and a nose cone 64. The fan blades 62 are mounted on and circumferentially distributed about the fan disk 60. The nose cone 64 is disposed upstream of the fan disk 60 at an axially upstream end of the bladed fan rotor 58. The first shaft 46 and the second shaft 52 are concentric and configured to rotate about the axis 44. The present disclosure, however, is not limited to concentric configurations of the first shaft 46 and the second shaft 52.

The engine static structure 36 may include one or more engine cases, cowlings, bearing assemblies, and/or other non-rotating structures configured to house and/or support (e.g., rotationally support) components of the gas turbine engine 22 sections 28, 30, 32, 34.

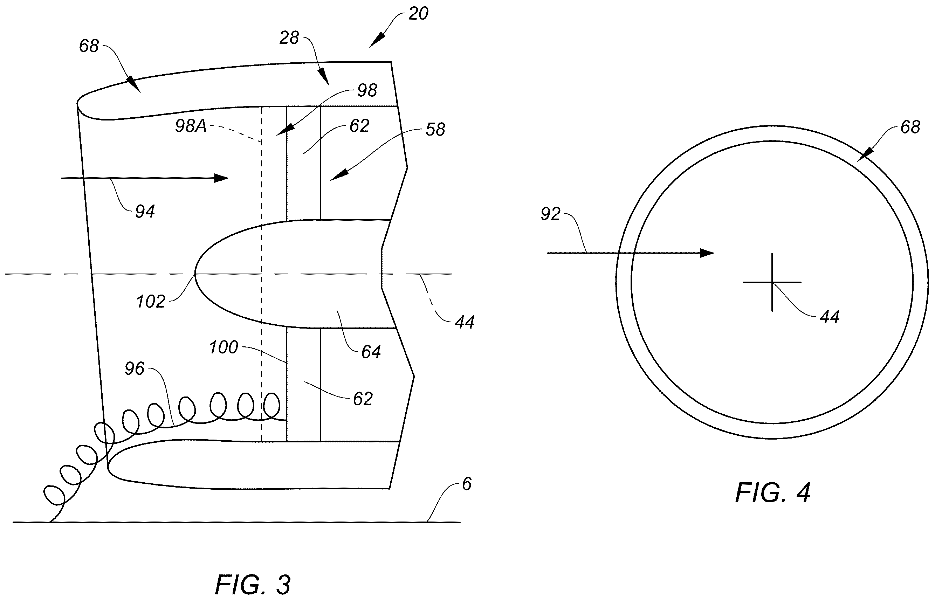

With additional reference to FIG. 3, the nacelle 24 forms an exterior aerodynamic housing for the propulsion system 20. The nacelle 24 of FIGS. 2 and 3 extends circumferentially about (e.g., completely around) the axis 44. The nacelle 24 circumscribes the gas turbine engine 22 and forms a bypass duct 66 (e.g., an annular bypass duct) radially between the gas turbine engine 22 (e.g., the engine static structure 36) and the nacelle 24. The nacelle 24 forms an air inlet 68 at the fan section 28. The air inlet 68 of FIG. 3 includes a leading edge 70 and an inner skin 72. The air inlet 68 forms an inlet plane 74 of the propulsion system 20 at the leading edge 70. The inner skin 72 extends downstream (e.g., aftward) from the leading edge 70 forming an inner air flow surface of the air inlet 68. The inner skin 72 forms and circumscribes an inlet flow region 76 extending (e.g., axially extending) between and to the inlet plane 74 and the fan blades 62.

The engine control system 26 includes a controller 78 and a sensor assembly 80. The controller 78 includes a processor 82 connected in signal communication with memory 84. The processor 82 may include any type of computing device, computational circuit, processor(s), central processing unit (CPU), graphics processing unit (GPU), computer, or the like capable of executing a series of instructions that are stored in the memory 84. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 78 and its processor 82 to accomplish the same algorithmically and/or coordination of gas turbine engine 22 components. The memory 84 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the controller 78. The controller 78 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the controller 78 and external electrical or electronic devices may be via a hardwire connection or via a wireless connection. A person of skill in the art will recognize that portions of the controller 78 may assume various forms (e.g., digital signal processor, analog device, etc.).

The controller 78 may form or otherwise be part of an electronic engine controller (EEC) for the gas turbine engine 22. The EEC may control operating parameters of the gas turbine engine 22 including, but not limited to, fuel flow, stator vane positions, compressor air bleed valve positions, shaft (e.g., first shaft 46 and/or second shaft 52) torque and/or rotation speed, etc. so as to control an engine power or performance of the gas turbine engine 22. In some embodiments, the EEC may be part of a full authority digital engine control (FADEC) system for the gas turbine engine 22.

The sensor assembly 80 includes a plurality of sensors 86 connected in signal communication with the controller 78. The sensors 86 of FIG. 2 include a rotation speed sensor 86A for the first rotational assembly 40, a rotation speed sensor 86B for the second rotational assembly 42, an inlet pressure sensor 86C for the inlet flow region 76, and an inlet temperature sensor 86D for the inlet flow region 76. Of course, the sensor assembly 80 is not limited to the foregoing sensors 86A-D and may include other sensors to facilitate operation and control of the gas turbine engine 22. The rotation speed sensor 86A is configured to generate an output signal representative of a rotation speed of the first rotational assembly 40 (e.g., the first shaft 46). This rotation speed of the first rotational assembly 40 may be expressed, for example, as an "N2" speed representative of the first rotational assembly 40 rotation speed as a percentage of (or a fraction of) a maximum normal operating speed of the first rotational assembly 40. Similarly, the rotation speed sensor 86B is configured to generate an output signal representative of a rotation speed of the second rotational assembly 42 (e.g., the second shaft 52), which rotation speed may be expressed, for example, as an "N1" speed representative of the second rotational assembly 42 rotation speed as a percentage of (or a fraction of) a maximum normal operating speed of the second rotational assembly 42. The inlet pressure sensor 86C is configured to generate an output signal representative of an ambient pressure (Pamb) (e.g., a surrounding atmospheric pressure). The inlet temperature sensor 86D is configured to generate an output signal representative of an ambient temperature (Tamb) (e.g., a surrounding atmospheric temperature).

In operation of the propulsion system 20 and its gas turbine engine 22, ambient air is directed through the inlet flow region 76 and the fan section 28 and into a core flow path 88 (e.g., an annular flow path) and a bypass flow path 90 (e.g., an annular flow path) facilitated by rotation of the bladed fan rotor 58. Airflow along the core flow path 88 is compressed by the low-pressure compressor 30A and the high-pressure compressor 30B, mixed and burned with fuel in the combustor 38, and then directed through the high-pressure turbine 34A and the low-pressure turbine 34B. The bladed first turbine rotor 50 and the bladed second turbine rotor 56 rotationally drive the first rotational assembly 40 and the second rotational assembly 42, respectively, in response to the combustion gas flow through the high-pressure turbine 34A and the low-pressure turbine 34B. Air flow is further directed through the bypass duct 66 along the bypass flow path 90 to facilitate propulsion system thrust.

While the propulsion system 20 is operating, and particularly with the aircraft 1000 on or near the ground (e.g., during a takeoff procedure for the aircraft 1000), the occurrence of crosswind conditions at the propulsion system 20 may have the effect of destabilizing air flow conditions within the air inlet 68 and the fan section 28. A crosswind flow 92, as shown for example in FIG. 4, may be understood as wind at the air inlet 68 having a direction generally transverse to the axis 44. This crosswind flow 92 may be contrasted with axial air flow 94 into and through the air inlet 68 (e.g., the inlet flow region 76), as shown in FIG. 3. This axial air flow 94 may be understood to flow in a direction generally parallel to the axis 44 and may primarily be a function of the bladed fan rotor 58 rotation speed (e.g., an N1 speed of the second rotational assembly 42). In some cases, the crosswind flow 92 may be sufficient to facilitate formation of a ground vortex 96 which may extend from a position proximate the ground G into and through the air inlet 68 (e.g., the inlet flow region 76). In some cases, as shown in FIG. 3, this ground vortex 96 may extend to the fan blades 62 where the ground vortex 96 may destabilize air flow at localized portions of the rotating fan blades 62, imparting vibration and/or stress on the fan blades 62. Conventionally, one option for preventing or mitigating the impact of a ground vortex on fan blades has been to perform a rolling start when initiating an aircraft takeoff procedure. A rolling start may be understood, for example, as part of a takeoff procedure in which the aircraft brakes are released prior to reaching a target takeoff thrust from the propulsion systems of the aircraft. For example, the aircraft's propulsion systems may be operating at an initial thrust to propel the aircraft forward and the propulsion systems may be controlled to operate at their target takeoff thrust while the aircraft as the aircraft continues to move forward. While a rolling start may be effective for preventing or mitigating the impact of a ground vortex on propulsion system fan blades, it also increases a takeoff distance (e.g., a required runway length) for the aircraft.

In accordance with the present disclosure, the propulsion system 20 (e.g., the gas turbine engine 22) may be operated to break down the ground vortex 96 such that the ground vortex 96 terminates upstream of the fan blades 62 and, therefore, does not reach and/or has no material impact on the fan blades 62. The inlet flow region 76 may be understood to have a reference section 98 which is upstream of the fan blades 62, for example, at (e.g., on, adjacent, or proximate) a leading edge 100 of each of the fan blades 62, as shown in FIG. 3. This reference section 98 may be axially coincident with the bladed fan rotor 58, for example, axially between the fan blades 62 (e.g., the leading edge 100 of each of the fan blades 62) and a distal axial end 102 (e.g., an upstream axial end) of the nose cone 64. The reference section 98 has a known cross-sectional air flow reference area (Aref), for example, on a reference plane 98A orthogonal to the axis 44. As will be discussed in further detail, the propulsion system 20 (e.g., the gas turbine engine 22) may be operated to control air flow into and through the reference section 98 to break down the ground vortex 96 at (e.g., within or proximately upstream of) the reference section 98.

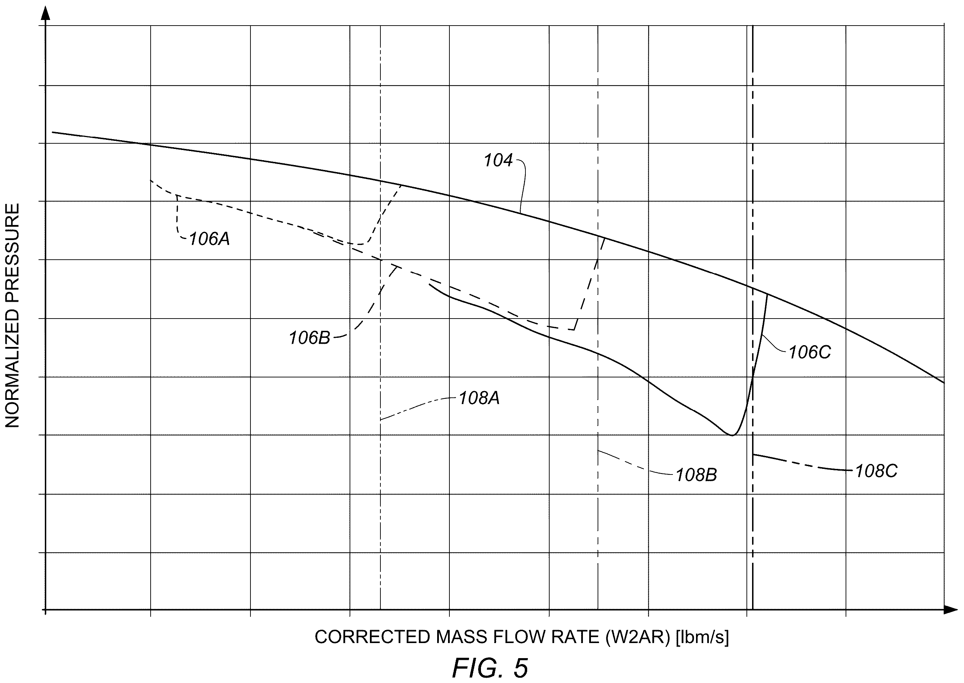

Referring to FIG. 5, the state of conditions for breaking down the ground vortex 96 at the reference section 98 may be characterized by a corrected mass flow rate (W2AR) of air flow through the reference section 98 relative to pressure conditions of the propulsion system 20 and its air inlet 68. FIG. 5 illustrates a graph of the corrected mass flow rate (W2AR) (X-axis) vs. pressure normalized for ambient pressure (Pamb) (Y-axis). The graph of FIG. 5 includes a normalized average static pressure curve 104 of the reference section 98. The graph of FIG. 5 further includes normalized minimum vortex pressure curves 106A, 106B, 106C of the reference section 98 for three different crosswind flow 92 speed conditions. The curve 106C is representative of a greater crosswind flow 92 speed than the curve 106B and the curve 106B is representative of a greater crosswind flow 92 speed than the curve 106A. For the conditions associated with each of the normalized minimum vortex pressure curves 106A, 106B, 106C, the ground vortex 96 may be expected to break down at the reference section 98 with the corrected mass flow rate (W2AR) equal to or greater than a respective vortex breakdown point 108A, 108B, 108C, which vortex breakdown points 108A-C are values of the corrected mass flow rate (W2AR). As can be understood from FIG. 5, as the crosswind flow 92 speed increases, a value of the corrected mass flow rate (W2AR) to effect break down of the ground vortex 96 within the reference section 98 may also increase.

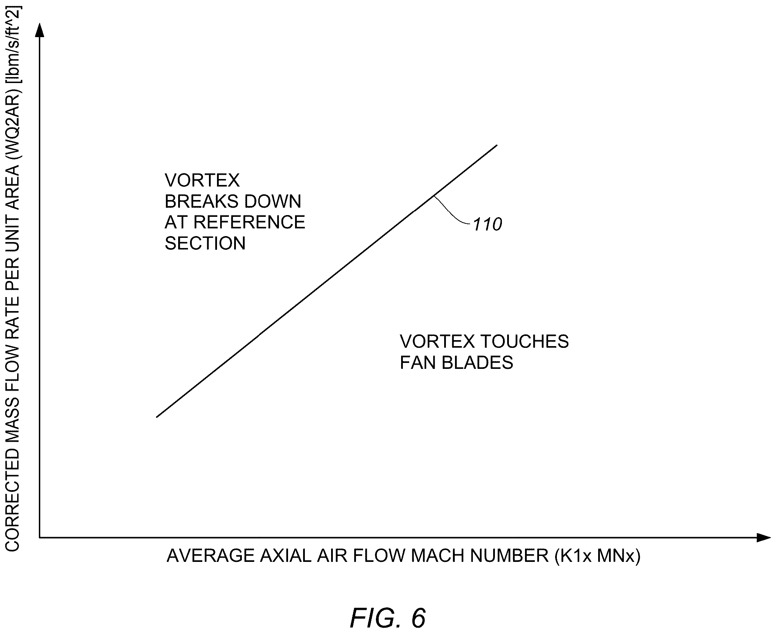

Referring to FIG. 6, for a given crosswind velocity (Vx) of the crosswind flow 92, a corrected mass flow rate per unit area (WQ2AR) for the reference section 98 sufficient to break down the ground vortex 96 at the reference section 98 may be identified. FIG. 6 illustrates a graph of average axial air flow Mach number (MNinlet) through the reference section 98 (X-axis) vs. the corrected mass flow rate per unit area (WQ2AR) for the reference section 98 (Y-axis). The average axial air flow Mach number (MNinlet) may be equal to or substantially equal to a product of a crosswind Mach number (MNx; e.g., derived from the crosswind velocity (Vx)) and a vortex breakdown coefficient (K1) for the reference section 98. The vortex breakdown coefficient (K1) is a ratio of average axial air flow velocity (Vinlet) through the reference section 98 to the crosswind velocity (Vx) where the ground vortex 96 breaks down within the reference section 98 upstream of the fan blades 62. The graph of FIG. 6 illustrates a vortex breakdown line 110 representative of typical values of the corrected mass flow rate per unit area (WQ2AR) for a separationfree air inlet sufficient to break down the ground vortex 96 within the reference section 98 experimentally derived for a range of values of the crosswind Mach number (MNx) and different aircraft propulsion system configurations (e.g., different air inlet sizes, shapes, etc.). Values of the vortex breakdown coefficient (K1) may exhibit relatively low variation between different crosswind Mach numbers (MNx) and aircraft propulsion systems and may typically be in the range of approximately 14 to approximately 16 (dimensionless). In other words, for values of the corrected mass flow rate per unit area (WQ2AR) at or above the vortex breakdown line 110, the ground vortex 96 may be expected to break down at the reference section 98 upstream of the fan blades 62. For further example, for air flow conditions in which the ground vortex 96 is expected to break down at the reference section 98, the a ratio of the average axial air flow Mach number (MNinlet) to the crosswind Mach number (MNx) may be greater than or equal to the vortex breakdown coefficient (K1) and, similarly, a ratio of the average axial air flow velocity (Vinlet) to the crosswind velocity (Vx) may also be greater than or equal to the vortex breakdown coefficient (K1). For values of the corrected mass flow rate per unit area (WQ2AR) below the vortex breakdown line 110, the ground vortex 96 may be expected to touch and interact with the fan blades 62. Accordingly, values of the corrected mass flow rate per unit area (WQ2AR) sufficient to break down the ground vortex 96 at the reference section 98 may be identified, for example, by application of the following equation [1]:

$$WQ2AR > MNx * K1 * K2 + K3 \quad [1]$$

where K2 and K3 represent correlation coefficients for the vortex breakdown line 110 as a slope (i.e., K2) and a Y-intercept (i.e., K3). Routine analysis and/or experimentation may be performed by one of ordinary skill in the art to select values of the coefficient K1 and the coefficients K2, K3 suitable for identifying values of corrected mass flow rate per unit area (WQ2AR) sufficient to break down a ground vortex as described above for a given aircraft propulsion system and range of crosswind conditions, in accordance with and as informed by one or more aspects of the present disclosure.

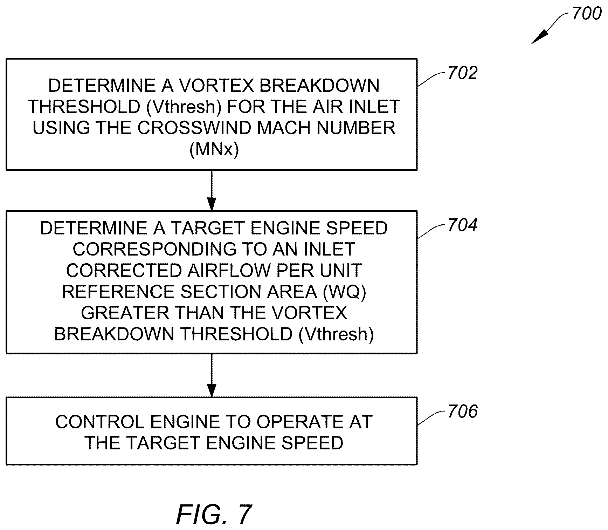

Referring to FIG. 7, a method 700 for operating an aircraft propulsion system to break down an air intake ground vortex is provided. FIG. 7 illustrates a flowchart of the method 700. The method 700 (and other methods and aspects of the present disclosure) is described herein for aircraft propulsion systems (e.g., the propulsion system 20) mounted on an aircraft (e.g., the aircraft 1000; see FIG. 1) in a grounded condition. This method 700 may typically be performed as part of an aircraft takeoff procedure including a static start for which aircraft braking (e.g., with the aircraft stationary) is maintained until the aircraft propulsion system(s) reach their target takeoff thrust, in contrast to the rolling start described above. However, the present disclosure is not limited to execution of the method 700 in combination with static start takeoff procedures or with takeoff procedures in general. For ease of description, the method 700 is described below with reference to the propulsion system 20 of FIGS. 1-4. The method 700, however, may alternatively be performed with other aircraft propulsion system configurations. The controller 78 (e.g., the processor 82) may execute instructions stored in the memory 84, thereby causing the controller 78 (e.g., the processor 82) to perform and/or control one or more steps or portions of steps of the method 700. Unless otherwise noted herein, it should be understood that the steps of method 700 are not required to be performed in the specific sequence in which they are discussed below and, in various embodiments, the steps of method 700 may be performed separately or simultaneously.

Step 702 includes determining (e.g., at the controller 78) a vortex breakdown threshold (Vthresh) for the air inlet 68. The vortex breakdown threshold (Vthresh) is a minimum value of the corrected air mass flow rate per unit area (WQ2AR) to break down a ground vortex upstream of the fan blades 62, for example, within or upstream of the reference section 98. The vortex breakdown threshold (Vthresh) may be determined as the corrected air mass flow rate per unit area (WQ2AR) using the Equation [1] and the crosswind Mach number (MNx). For example, the vortex breakdown threshold (Vthresh) may be a point on the vortex breakdown line 110 for the current value of the crosswind Mach number (MNx).

Step 704 includes determining (e.g., at the controller 78) a target vortex breakdown engine speed (N1bd) for the gas turbine engine 22 using the vortex breakdown threshold (Vthresh). The target vortex breakdown engine speed (N1bd) is expressed, for example, as a value of the N1 speed of the first rotational assembly 40; however, the target vortex breakdown engine speed may alternatively be expressed using any other engine speed or engine power output parameter such as, but not limited to, N2 speed, shaft RPM, shaft horsepower, engine pressure ratio, or the like. The target vortex breakdown engine speed (N1bd) is the engine speed corresponding to the vortex breakdown threshold (Vthresh). In other words, the gas turbine engine 22 operating at the target vortex breakdown engine speed (N1bd) may be expected to have the corrected air mass flow rate per unit area (WQ2AR) equal to or substantially equal to the vortex breakdown threshold (Vthresh). The target vortex breakdown engine speed (N1bd) for a given value of the vortex breakdown threshold (Vthresh) may be identified (e.g., by the controller 78) using lookup tables, performance charts, engine performance models, and/or other algorithms (e.g., stored in the memory 84). Step 704 may additionally include identifying a throttle setting (e.g., a power lever angle (PLA) or other engine power control and/or engine speed setting) corresponding to the target vortex breakdown engine speed (N1bd).

Step 706 includes controlling (e.g., at the controller 78) the gas turbine engine 22 to operate at the target vortex breakdown engine speed (N1bd). For example, the controller 78 may apply the engine speed setting determined in Step 704 to control the gas turbine engine 22 to operate at the target vortex breakdown engine speed (N1bd). Alternatively, a pilot or other operator of the aircraft 1000 may issue a throttle command for the engine speed setting to the controller 78 (e.g., using a throttle control lever) and the controller 78 may control the gas turbine engine 22 to operate at the target vortex breakdown engine speed (N1bd) based on the throttle command.

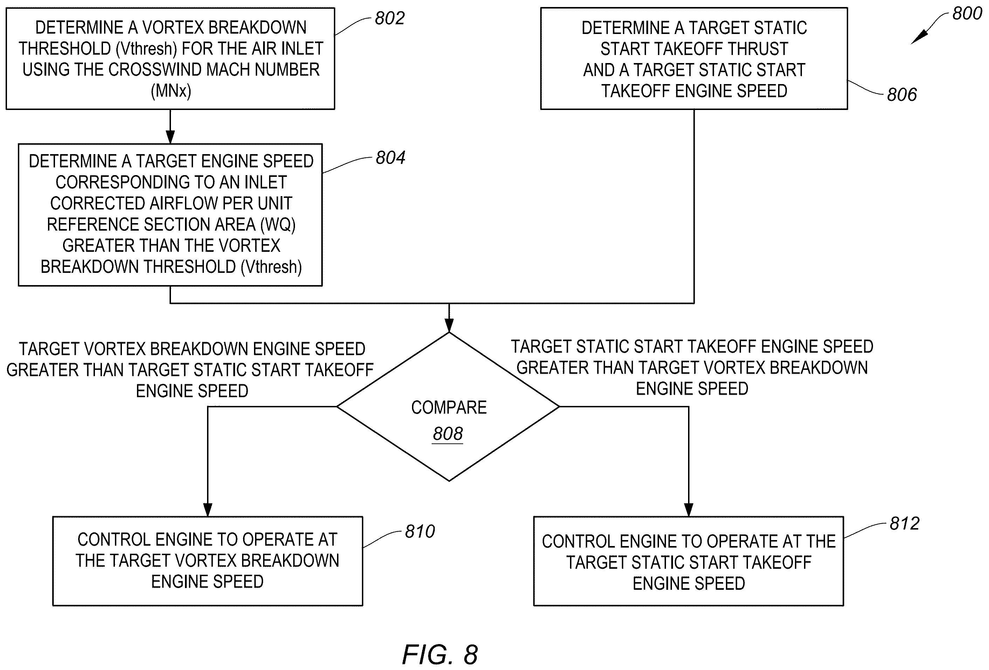

Referring to FIG. 8, a method 800 for operating an aircraft propulsion system for an aircraft takeoff procedure is provided. FIG. 8 illustrates a flowchart of the method 800. For ease of description, the method 800 is described below with reference to the propulsion system 20 of FIGS. 1-4. The method 800, however, may alternatively be performed with other aircraft propulsion system configurations. The method 800 of FIG. 8 may be of particular utility for propulsion system air intakes which are designed to be "separation free" such that inlet air flow is not expected to experience flow separation from air inlet interior surfaces (e.g., the inner skin 72) for crosswind conditions throughout the propulsion system's entire operating envelope. However, as will be discussed in further detail, the method 800 is not limited in applicability to propulsion system air intakes which are designed to be separation free. The controller 78 (e.g., the processor 82) may execute instructions stored in the memory 84, thereby causing the controller 78 (e.g., the processor 82) to perform and/or control one or more steps or portions of steps of the method 800. Unless otherwise noted herein, it should be understood that the steps of method 800 are not required to be performed in the specific sequence in which they are discussed below and, in various embodiments, the steps of method 800 may be performed separately or simultaneously.

Step 802 includes determining (e.g., at the controller 78) a vortex breakdown threshold (Vthresh) for the air inlet 68. The vortex breakdown threshold (Vthresh) is a minimum value of the corrected air mass flow rate per unit area (WQ2AR) to break down a ground vortex upstream of the fan blades 62, for example, within or upstream of the reference section 98. The vortex breakdown threshold (Vthresh) may be determined as the corrected air mass flow rate per unit area (WQ2AR) using the Equation [1] and the crosswind Mach number (MNx). For example, the vortex breakdown threshold (Vthresh) may be a point on the vortex breakdown line 110 for the current value of the crosswind Mach number (MNx).

Step 804 includes determining (e.g., at the controller 78) a target vortex breakdown engine speed (N1bd) for the gas turbine engine 22 using the vortex breakdown threshold (Vthresh). The target vortex breakdown engine speed (N1bd) is expressed, for example, as a value of the N1 speed of the first rotational assembly 40; however, the target vortex breakdown engine speed may alternatively be expressed using any other engine speed or engine power output parameter such as, but not limited to, N2 speed, shaft RPM, shaft horsepower, engine pressure ratio, or the like. The target vortex breakdown engine speed (N1bd) is the engine speed corresponding to the vortex breakdown threshold (Vthresh). In other words, the gas turbine engine 22 operating at the target vortex breakdown engine speed (N1bd) may be expected to have the corrected air mass flow rate per unit area (WQ2AR) equal to or substantially equal to the vortex breakdown threshold (Vthresh). The target vortex breakdown engine speed (N1bd) for a given value of the vortex breakdown threshold (Vthresh) may be identified (e.g., by the controller 78) using lookup tables, performance charts, engine performance models, and/or other algorithms (e.g., stored in the memory 84). Step 804 may additionally include identifying a throttle setting (e.g., a power lever angle (PLA) or other engine power control and/or engine speed setting) corresponding to the target vortex breakdown engine speed (N1bd).

Step 806 includes determining (e.g., at the controller 78) a target static start takeoff thrust for the propulsion system 20. The target static start takeoff thrust may be determined (e.g., calculated) based, for example, on factors such as, but not limited to, aircraft 1000 weight, wind speed and direction, ambient pressure (Pamb), ambient temperature (Tamb), runway length, and the like, using known methods, and the present disclosure is not limited to any particular process for calculating the target static start takeoff thrust. Step 806 further includes determining (e.g., at the controller 78) a target static start takeoff engine speed (N1sstakeoff) for the gas turbine engine 22 using the static start target takeoff thrust, for example, using lookup tables, performance charts, engine performance models, and/or other algorithms (e.g., stored in the memory 84). Step 806 may additionally include identifying a throttle setting (e.g., a power lever angle (PLA) or other engine power control and/or engine speed setting) corresponding to the target static start takeoff engine speed (N1sstakeoff).

Step 808 includes comparing (e.g., at the controller 78) the target vortex breakdown engine speed (N1bd) of step 804 and the target static start takeoff engine speed (N1sstakeoff) of step 806.

Step 810 includes controlling (e.g., at the controller 78) the gas turbine engine 22 to operate at the target vortex breakdown engine speed (N1bd) where the target vortex breakdown engine speed (N1bd) is greater than the target static start takeoff engine speed (N1sstakeoff). For example, the controller 78 may apply the engine speed setting determined in Step 804 to control the gas turbine engine 22 to operate at the target vortex breakdown engine speed (N1bd). Alternatively, a pilot or other operator of the aircraft 1000 may issue a throttle command for the engine speed setting to the controller 78 (e.g., using a throttle control lever) and the controller 78 may control the gas turbine engine 22 to operate at the target vortex breakdown engine speed (N1bd) based on the throttle command.

Step 812 includes controlling (e.g., at the controller 78) the gas turbine engine 22 to operate at the target static start takeoff engine speed (N1sstakeoff) where the target static start takeoff engine speed (N1sstakeoff) is greater than the target vortex breakdown engine speed (N1bd). For example, the controller 78 may apply the engine speed setting determined in Step 806 to control the gas turbine engine 22 to operate at the target static start takeoff engine speed (N1sstakeoff). Alternatively, a pilot or other operator of the aircraft 1000 may issue a throttle command for the engine speed setting to the controller 78 (e.g., using a throttle control lever) and the controller 78 may control the gas turbine engine 22 to operate at the target static start takeoff engine speed (N1sstakeoff) based on the throttle command.

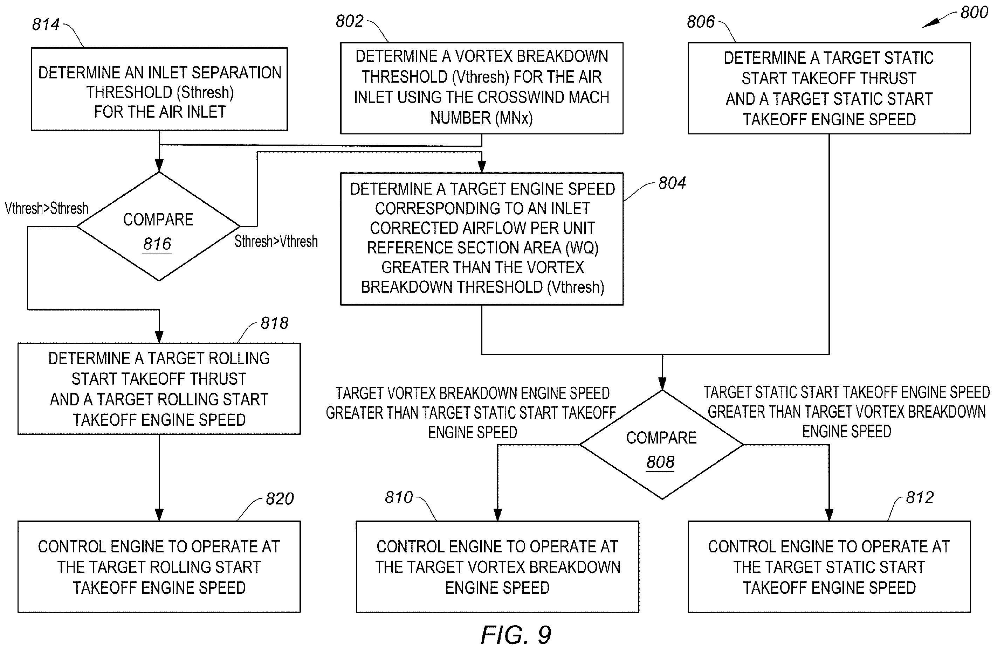

Referring to FIG. 9, in some embodiments, the method 800 may further include executing of a rolling start takeoff procedure under at least some operating conditions of the aircraft 1000 and its propulsion system 20. The method 800 embodiment of FIG. 9 may be of particular utility for propulsion system air intakes which are designed to experience air flow separation from air inlet interior surfaces (e.g., the inner skin 72) during at least some operating conditions (e.g., crosswind conditions) within the propulsion system's operating envelope.

Step 814 includes determining (e.g., at the controller 78) an inlet separation threshold (Sthresh) for the air inlet 68. The inlet separation threshold (Sthresh) is a value of the corrected air mass flow rate per unit area (WQ2AR), for a given value of the crosswind velocity (Vx) (or the crosswind Mach number (MNx)), above which the air inlet 68 may experience (substantial) air flow separation. The inlet separation threshold (Sthresh) for a given value of the the crosswind velocity (Vx) may be identified (e.g., by the controller 78) using lookup tables, performance charts, engine performance models, and/or other algorithms (e.g., stored in the memory 84). Routine experimentation and/or analysis may be performed by one of ordinary skill in the art to identify values of corrected mass flow rate per unit area (WQ2AR) and the crosswind velocity (Vx) at which substantial inlet air flow separation may occur or not occur, in accordance with and as informed by one or more aspects of the present disclosure.

Step 816 includes comparing (e.g., at the controller 78) the inlet separation threshold (Sthresh) of step 814 and the vortex breakdown threshold (Vthresh) of step 802.

Step 818 includes determining (e.g., at the controller 78) a target rolling start takeoff thrust for the propulsion system 20 where the vortex breakdown threshold (Vthresh) is greater than the inlet separation threshold (Sthresh). The target rolling start takeoff thrust may be determined such that the corrected air mass flow rate per unit area (WQ2AR) during the rolling start takeoff procedure does not exceed the inlet separation threshold (Sthresh). The target rolling start takeoff thrust may be determined (e.g., calculated) based, for example, on factors such as, but not limited to, aircraft 1000 initial speed (e.g., rolling speed), aircraft 1000 weight, wind speed and direction, ambient pressure (Pamb), ambient temperature (Tamb), runway length, and the like, using known methods, and the present disclosure is not limited to any particular process for calculating the target rolling start takeoff thrust. Step 818 further includes determining (e.g., at the controller 78) a target rolling start takeoff engine speed (N1rstakeoff) for the gas turbine engine 22 using the rolling start target takeoff thrust, for example, using lookup tables, performance charts, engine performance models, and/or other algorithms (e.g., stored in the memory 84). Step 818 may additionally include identifying a throttle setting (e.g., a power lever angle (PLA) or other engine power control and/or engine speed setting) corresponding to the target rolling start takeoff engine speed (N1rstakeoff).

Step 820 includes controlling (e.g., at the controller 78) the gas turbine engine 22 to operate at the target rolling start takeoff engine speed (N1rstakeoff), for example, in combination with a rolling start takeoff procedure for the aircraft 1000. The controller 78 may apply the engine speed setting determined in Step 818 to control the gas turbine engine 22 to operate at the target rolling start takeoff engine speed (N1rstakeoff). Alternatively, a pilot or other operator of the aircraft 1000 may issue a throttle command for the engine speed setting to the controller 78 (e.g., using a throttle control lever) and the controller 78 may control the gas turbine engine 22 to operate at the target rolling start takeoff engine speed (N1rstakeoff) based on the throttle command.

Where the vortex breakdown threshold (Vthresh) is less than the inlet separation threshold (Sthresh), the method 800 may instead proceed with steps 804, 806, 808, 810, and/or 812 as discussed above.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An aircraft propulsion system (20) comprising:

   a gas turbine engine (22) including a rotational assembly rotatable about an axis (44), the rotational assembly including a bladed fan rotor (58), the bladed fan rotor (58) including a plurality of fan blades (62);
   a nacelle (24) housing the gas turbine engine (22), the nacelle (24) including an air inlet (68), the air inlet (68) forming an inlet flow region (76), the inlet flow region (76) including a reference section (98) at and upstream of the plurality of fan blades (62), the reference section (98) including a cross-sectional flow area of the inlet flow region (76); and
   a controller (78) including a processor (82) connected in signal communication with a non-transitory memory (84) storing instructions which, when executed by the processor (82), cause the processor (82) to:
   control the gas turbine engine (22) to operate at or above a target engine speed corresponding to corrected air mass flow rate per unit area through the reference section (98) which is greater than a vortex breakdown threshold for the reference section (98).

2. The aircraft propulsion system (20) of claim 1, wherein the instructions, when executed by the processor (82), further cause the processor (82) to:

   determine the vortex breakdown threshold for the reference section (98), using a crosswind velocity (Vx) input, by determining a crosswind Mach number (MNx) of the crosswind velocity (Vx) input, the vortex breakdown threshold is a function of the crosswind Mach number (MNx) and a predetermined ratio of axial inlet velocity to crosswind velocity for vortex breakdown in the reference section (K1), and the vortex breakdown threshold is a first value of the corrected air mass flow rate per unit area within the reference section (98); and
determine the target engine speed for the gas turbine engine (22) corresponding to the vortex breakdown threshold.

3.  The aircraft propulsion system (20) of claim 2, wherein the predetermined ratio of axial inlet velocity to crosswind velocity for vortex breakdown in the reference section (K1) is between 14 and 16.

4.  The aircraft propulsion system (20) of claim 2 or 3, wherein:
    the instructions, when executed by the processor (82), further cause the processor (82) to:

    determine an inlet air flow separation threshold for the inlet flow region (76), and the inlet air flow separation threshold is a second value of the corrected air mass flow rate per unit area within the reference section (98); and
    control the gas turbine engine (22) to operate at or above the target engine speed by:

    where the first value is less than the second value, determine a first static start engine speed setting for the gas turbine engine (22), and control the gas turbine engine (22) to operate at or above the target engine speed set as the first static start engine speed; and
    where the first value is greater than the second value, determine a second rolling start engine speed setting for the gas turbine engine (22), and control the gas turbine engine (22) to operate at or above the target engine speed set as the second rolling start engine speed.

5.  The aircraft propulsion system (20) of any preceding claim, wherein:
    the instructions, when executed by the processor (82), further cause the processor (82) to:

    determine a first engine speed setting for the gas turbine engine (22) corresponding to the vortex breakdown threshold, determine a takeoff thrust demand for the aircraft propulsion system (20), and determine a second engine speed setting for the gas turbine engine (22) corresponding to the takeoff thrust demand; and
    control the gas turbine engine (22) to operate at or above the target engine speed set as the greater of the first engine speed setting or the second engine speed setting.

6.  The aircraft propulsion system (20) of any preceding claim, wherein the corrected air mass flow rate per unit area is defined through the cross-sectional flow area.

7.  A method for operating a propulsion system (20) of an aircraft (1000) to break down a ground vortex (96), the method comprising:

    rotating a rotational assembly of a gas turbine engine (22) of the propulsion system (20) about an axis (44) to form a corrected air mass flow rate per unit area within a reference section (98) of an air inlet (68) of the propulsion system (20), the rotational assembly including a bladed fan rotor (58), the bladed fan rotor (58) including a plurality of fan blades (62) at a downstream end of the reference section (98);
    determining a vortex breakdown threshold for the reference section (98) using a crosswind velocity (Vx) input, and the vortex breakdown threshold is a first value of the corrected air mass flow rate per unit area;
    determining a target engine speed for the gas turbine engine (22) corresponding to the vortex breakdown threshold; and
    controlling the gas turbine engine (22) to operate at or above the target engine speed.

8.  The method of claim 7, wherein determining the vortex breakdown threshold includes determining a crosswind Mach number (MNx) of the crosswind velocity (Vx) input, and the vortex breakdown threshold is a function of the crosswind Mach number (MNx) and a predetermined ratio of axial inlet velocity to crosswind velocity for vortex breakdown in the reference section (K1),
    wherein, optionally, the predetermined ratio of axial inlet velocity to crosswind velocity for vortex breakdown in the reference section (K1) is between 14 and 16.

9.  The method of claim 8, wherein:

    a ratio of an average axial air flow Mach number (MNinlet) through the reference section (98) to the crosswind Mach number (MNx) is greater than or equal to the predetermined ratio of axial inlet velocity to crosswind velocity for vortex breakdown in the reference section (K1) while controlling the gas turbine engine (22) to operate at or above the target engine speed; and/or
    a ratio of an average axial air flow velocity (Vinlet) through the crosswind velocity (Vx) input is greater than or equal to the predetermined ratio of axial inlet velocity to crosswind velocity for vortex breakdown in the reference section (K1) while controlling the gas turbine engine (22) to operate at or above the target engine speed.

10. The method of claim 7, 8 or 9, further comprising:

determining a first engine speed setting for the gas turbine engine (22) corresponding to the vortex breakdown threshold, determining a takeoff thrust demand for the aircraft propulsion system (20), and determining a second engine speed setting for the gas turbine engine (22) corresponding to the takeoff thrust demand; and performing a takeoff procedure including the step of controlling the gas turbine engine (22) to operate at or above the target engine speed by controlling the gas turbine engine (22) to operate at or above the target engine speed set as the greater of the first engine speed setting or the second engine speed setting.

11. The method of any of claims 7 to 10, further comprising:

determining an inlet air flow separation threshold for the air inlet (68), and the inlet air flow separation threshold is a second value of the corrected air mass flow rate per unit area within the reference section (98); and
performing a takeoff procedure including the step of controlling the gas turbine engine (22) to operate at or above the target engine speed by controlling the gas turbine engine (22) to operate at or above the target engine speed by:

where the first value is less than the second value, determining a first static start engine speed setting for the gas turbine engine (22), and controlling the gas turbine engine (22) to operate at or above the target engine speed set as the first static start engine speed; and
where the first value is greater than the second value, determining a second rolling start engine speed setting for the gas turbine engine (22), and controlling the gas turbine engine (22) to operate at or above the target engine speed set as the second rolling start engine speed.

12. The method of any of claims 7 to 11, wherein the steps of rotating the rotational assembly, determining the vortex breakdown threshold, determining the target engine speed, and controlling the gas turbine engine (22) to operate at or above the target engine speed are performed with the aircraft (1000) in a grounded condition.

13. The method of any of claims 7 to 12, wherein the reference section (98) has a cross-sectional flow area, and the corrected air mass flow rate per unit area is defined through the cross-sectional flow area, wherein, optionally, the cross-sectional flow area is orthogonal to the axis (44).

14. The aircraft propulsion system of claim 6 or the method of claim 13, wherein the bladed fan rotor (58) further includes a nose cone (64) having an upstream axial end, and the reference section (98) is between the plurality of fan blades (62) and the upstream axial end.

15. The aircraft propulsion system or method of any preceding claim, wherein the target engine speed is a rotational speed of the rotational assembly.

FIG. 1

*FIG. 2*

EP 4 745 381 A1

FIG. 3

FIG. 4

EP 4 745 381 A1

FIG. 5

NORMALIZED PRESSURE

CORRECTED MASS FLOW RATE (W2AR) [lbm/s]

104
106A
106B
106C
108A
108B
108C

*FIG. 6*

700

DETERMINE A VORTEX BREAKDOWN
THRESHOLD (Vthresh) FOR THE AIR INLET
USING THE CROSSWIND MACH NUMBER
(MNx)
— 702

DETERMINE A TARGET ENGINE SPEED
CORRESPONDING TO AN INLET
CORRECTED AIRFLOW PER UNIT
REFERENCE SECTION AREA (WQ)
GREATER THAN THE VORTEX
BREAKDOWN THRESHOLD (Vthresh)
— 704

CONTROL ENGINE TO OPERATE AT
THE TARGET ENGINE SPEED
— 706

*FIG. 7*

FIG. 8

EP 4 745 381 A1

FIG. 9

814 — DETERMINE AN INLET SEPARATION THRESHOLD (Sthresh) FOR THE AIR INLET

802 — DETERMINE A VORTEX BREAKDOWN THRESHOLD (Vthresh) FOR THE AIR INLET USING THE CROSSWIND MACH NUMBER (MNx)

806 — DETERMINE A TARGET STATIC START TAKEOFF THRUST AND A TARGET STATIC START TAKEOFF ENGINE SPEED

800

816 — COMPARE

Vthresh>Sthresh

Sthresh>Vthresh

804 — DETERMINE A TARGET ENGINE SPEED CORRESPONDING TO AN INLET CORRECTED AIRFLOW PER UNIT REFERENCE SECTION AREA (WQ) GREATER THAN THE VORTEX BREAKDOWN THRESHOLD (Vthresh)

818 — DETERMINE A TARGET ROLLING START TAKEOFF THRUST AND A TARGET ROLLING START TAKEOFF ENGINE SPEED

808 — COMPARE

TARGET VORTEX BREAKDOWN ENGINE SPEED GREATER THAN TARGET STATIC START TAKEOFF ENGINE SPEED

TARGET STATIC START TAKEOFF ENGINE SPEED GREATER THAN TARGET VORTEX BREAKDOWN ENGINE SPEED

820 — CONTROL ENGINE TO OPERATE AT THE TARGET ROLLING START TAKEOFF ENGINE SPEED

810 — CONTROL ENGINE TO OPERATE AT THE TARGET VORTEX BREAKDOWN ENGINE SPEED

812 — CONTROL ENGINE TO OPERATE AT THE TARGET STATIC START TAKEOFF ENGINE SPEED

Europäisches
Patentamt

European
Patent Office

Office européen
des brevets

## EUROPEAN SEARCH REPORT

**Application Number**

EP 25 21 6455

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/112978 A1 (DI MARE LUCA [GB] ET AL) 18 April 2019 (2019-04-18) * paragraph [0015] - paragraph [0105]; figures 1-9 * ----- | 1-15 | INV. F02C9/00 |
| A | US 6 763 651 B2 (BOEING CO [US]) 20 July 2004 (2004-07-20) * the whole document * ----- | 1-15 | |
| A | US 4 070 827 A (VANFLEET CHARLES R ET AL) 31 January 1978 (1978-01-31) * the whole document * ----- | 1-15 | |

TECHNICAL FIELDS SEARCHED (IPC)

F02C

The present search report has been drawn up for all claims

| Place of search | Date of completion of the search | Examiner |
|---|---|---|
| The Hague | 25 March 2026 | Robelin, Bruno |

EPO FORM 1503 03.82 (P04C01)

## ANNEX TO THE EUROPEAN SEARCH REPORT
## ON EUROPEAN PATENT APPLICATION NO.

EP 25 21 6455

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | | | Publication date | Patent family member(s) | | | Publication date |
|---|---|---|---|---|---|---|---|
| US 2019112978 | A1 | | 18-04-2019 | EP | 3470652 | A1 | 17-04-2019 |
| | | | | US | 2019112978 | A1 | 18-04-2019 |
| US 6763651 | B2 | | 20-07-2004 | EP | 1413721 | A2 | 28-04-2004 |
| | | | | RU | 2281229 | C2 | 10-08-2006 |
| | | | | US | 2004079834 | A1 | 29-04-2004 |
| US 4070827 | A | | 31-01-1978 | BE | 854215 | A | 01-09-1977 |
| | | | | DE | 2718662 | A1 | 17-11-1977 |
| | | | | FR | 2350464 | A1 | 02-12-1977 |
| | | | | IT | 1071343 | B | 02-04-1985 |
| | | | | JP | S6014174 | B2 | 11-04-1985 |
| | | | | JP | S52142114 | A | 26-11-1977 |
| | | | | US | 4070827 | A | 31-01-1978 |

EPO FORM P0459

For more details about this annex : see Official Journal of the European Patent Office, No. 12/82